(19) Europäisches Patentamt

European Patent Office

Office européen des brevets

(11) **EP 0 591 734 B1**

(12) **EUROPÄISCHE PATENTSCHRIFT**

(45) Veröffentlichungstag und Bekanntmachung des Hinweises auf die Patenterteilung:
**23.12.1998 Patentblatt 1998/52**

(51) Int Cl.⁶: **C08L 25/14**

(21) Anmeldenummer: **93114976.9**

(22) Anmeldetag: **17.09.1993**

(54) **Polymerisate breiter Molmassenverteilung mit erhöhter Wärmeformbeständigkeit**

Polymers with large molecular weight distribution and enhanced heat distortion resistance

Polymères à grande distribution de poids moléculaire et à stabilité dimensionnelle à chaud plus élevée

(84) Benannte Vertragsstaaten:
**AT CH DE FR GB IT LI NL**

(30) Priorität: **05.10.1992 DE 4233374**

(43) Veröffentlichungstag der Anmeldung:
**13.04.1994 Patentblatt 1994/15**

(73) Patentinhaber: **Buna Sow Leuna Olefinverbund GmbH**
**06258 Schkopau (DE)**

(72) Erfinder:
• **Schellenberg, Jürgen, Dr.**
**D-06132 Halle (DE)**
• **Hamann, Bernd, Dr.**
**D-06124 Halle (DE)**

(56) Entgegenhaltungen:
FR-A- 2 620 126 FR-A- 2 692 584

• DATABASE WPI Derwent Publications Ltd., London, GB; AN 87-106171 XP002008394 & JP-A-62 054 749 (SEKISUI) , 10.März 1987

**Beschreibung**

Die Erfindung betrifft Polymerisate breiter Molmassenverteilung mit erhöhter Wärmeformbeständigkeit. Solche Kompositionen sind anwendbar z. B. als Bindemittelkomponenten in Schmelzklebstoffen und Beschichtungsmitteln, als Komponenten in Pulverlacken und Formulierungen zur vorübergehenden Hydrophobierung von Oberflächen, zur Modifizierung der Eigenschaften von Kunststoffen oder als Bindemittelharze für Toner.

Die JP-A-62 054 749 betrifft Bindemittelharze für Toner auf Basis einer Mischung eines Styrol/(Meth)acrylsäureesters I mit niedrigem Polymerisationsgrad sowie einem Styrol/(Meth)acrylsäureester II mit einem numerischen Molekulargewicht von 2,000-30,000.

Die Mischung weist eine Molekulargewichtverteilung von 3,5-40 auf.

Für die Herstellung von Polymerisaten mit erhöhter Wärmeformbeständigkeit auf der Grundlage vinylaromatischer Monomerer sind im allgemeinen Vorgehensweisen bekannt, die sich der Copolymerisation mit speziellen Monomeren bzw. des Abmischens mit geeigneten Copolymerisaten, die diese Monomeren enthalten, bedienen. Diese speziellen Monomeren sind solche, die aufgrund ihrer chemischen Struktur nach dem Einbau in die Polymerkette zu einer sterischen Hinderung der freien Drehbarkeit der Polymerkette bzw. zu spezifischen Wechselwirkungen auf intra- und intermolekularer Ebene führen. Ein bekanntes spezielles Monomer ist hier beispielsweise -Methylstyrol, das das Monomer Styrol ganz oder teilweise in Copolymerisaten mit Acrylnitril ersetzen kann (z. B. DE 3806074). Als weiteres spezielles Monomeres, das zu einer noch bedeutenderen Erhöhung der Wärmeformbeständigkeit von vinylaromatischen Copolymerisaten führt, ist Maleinsäureanhydrid bekannt (z. B. EP 433711). Eine noch weitergehende Verbesserung der Wärmeformbeständigkeit kann durch spezielle Monomere wie Maleimide, beispielsweise N-Phenylmaleimid, erzielt werden (z. B. WO 8802 380).

Diesen Vorgehensweisen haftet jedoch der Nachteil an, daß zur Herstellung von Polymerisaten mit erhöhter Wärmeformbeständigkeit zusätzliche spezielle Monomere in den Herstellungsprozeß mit einbezogen werden müssen. Das kann bei speziellen Monomeren, beispielsweise Maleinsäureanhydrid, so weit führen, daß aufgrund des Copolymerisationsverhaltens dieses Monomeren zur Erzielung chemisch weitgehend einheitlicher Polymerisate die Entwicklung und Anwendung spezieller Polymerisationsverfahren unabdingbar ist. Schließlich sind ein Teil dieser speziellen Monomeren sowohl während der Einsatzstoffbereitung für die Polymerisation als auch als Restmonomer im Polymerisat toxikologisch nicht unbedenklich und erfordern für diese Verfahrensstufen einen erhöhten technischen Aufwand.

Der Erfindung liegt die Aufgabe zugrunde, Polymerisate breiter Molmassenverteilung mit erhöhter Wärmeformbeständigkeit zu entwickeln, die keine diesbezüglichen zusätzlichen speziellen Monomeren enthalten und somit die genannten Nachteile bei der Herstellung solcher Polymerisate nicht aufweisen.

Erfindungsgemäß enthalten die Polymerisate breiter Molmassenverteilung mit erhöhter Wärmeformbeständigkeit chemisch weitgehend einheitliche Polymerkomponenten aus Monomerzusammensetzungen, bestehend aus

A) 40 bis 90 Masseteilen mindestens eines vinylaromatischen Monomeren,

B) 10 bis 60 Masseteilen mindestens eines (Meth)acrylsäureesters mit einer C-Zahl in der Alkylgruppe des Alkohols von 3 bis 8 und

C) 0 bis 30 Masseteilen, bezogen auf 100 Masseteile A und B, mindestens eines weiteren copolymerisierbaren Monomeren,

als Mischungen dieser Polymerkomponenten, bestehend aus

I) 20 bis 90 Masseteilen einer Polymerkomponente mit einer massenmittleren Molmasse von 2000 bis 80000 und einer molekularen Uneinheitlichkeit nach Schulz von 1 bis 10,

II) 10 bis 80 Masseteilen einer Polymerkomponente mit einer massenmittleren Molmasse von 100 000 bis 800 000 und einer molekularen Uneinheitlichkeit nach Schulz von 1 bis 5 und gegebenenfalls

III) 0 bis 180 Masseteilen, bezogen auf 100 Masseteile der Polymerkomponenten I und II, mindestens einer weiteren Polymerkomponente mit einer massenmittleren Molmasse von 5000 bis 500 000 und einer molekularen Uneinheitlichkeit nach Schulz von 1 bis 10.

Die Mischungen werden durch Schmelzmischen homogenisiert.

Die Polymerisate breiter Molmassenverteilung mit erhöhter Wärmeformbeständigkeit können als vinylaromatisches Monomer Styrol enthalten. Als (Meth)acrylsäureester mit einer C-Zahl in der Alkylgruppe des Alkohols von 3 bis 8 kann n-Butylmethacrylat dienen. Methylmethacrylat kann beispielsweise als weiteres copolymerisierbares Monomeres eingesetzt werden.

Erfindungsgemäß können die Polymerisate breiter Molmassenverteilung mit erhöhter Wärmeformbeständigkeit als Polymerkomponente I vorzugsweise 45 bis 85 Masseteile mit einer massenmittleren Molmasse von 4000 bis 30000 und einer molekularen Uneinheitlichkeit nach Schulz von 1 bis 10 enthalten. Als Polymerkomponente II können vorzugsweise 15 bis 55 Masseteile mit einer massenmittleren Molmasse von 150 000 bis 500 000 und einer molekularen Uneinheitlichkeit nach Schulz von 1 bis 5 verwendet werden.

Die Polymerisate breiter Molmassenverteilung mit erhöhter Wärmeformbeständigkeit zeichnen sich dadurch aus, daß im Herstellungsprozeß ohne den Einsatz von zusätzlichen speziellen Monomeren verfahren werden kann. Somit entfallen die damit verbundenen Nachteile wie beispielsweise spezielle Polymerisationsverfahren und erhöhter technischer Aufwand infolge toxikologischer Bedenklichkeit.

Die Herstellung der Polymerkomponenten erfolgte beispielsweise durch Polymerisation eines entsprechenden Monomergemisches mit oder ohne Gegenwart von Lösungsmitteln und in Anwesenheit von Hilfsstoffen wie Initiatoren in einer kontinuierlich arbeitenden Einreaktor-Polymerisationsanlage mit nachgeschalteter Entmonomerisierung.

Nachstehend soll die Erfindung an einigen ausgewählten Ausführungsbeispielen näher erläutert werden.

Beispiele 1 bis 4

Die Eigenschaften der Polymerkomponenten, die in einer kontinuierlichen Einreaktor-Polymerisationsanlage mit nachgeschalteter Entmonomerisierung hergestellt worden waren, sind bezüglich massenmittlerer Molmasse (SEC), molekularer Uneinheitlichkeit nach Schulz, K-Wert nach Fikentscher (0,5 g/100 ml, 25°C), Reststyrolgehalt im Polymerisat (Polarographie) und als Maß für die Wärmeformbeständigkeit die Glasübergangstemperatur (als der Temperatur unter konstantem Meßbebei der die Hälfte des maximalen, sprunghaften Anstiegs der spezifischen Wärmekapazität bei der DSC erreicht wird) in der Tabelle 1 zusammengefaßt.

Beispiele 5 und 6

In diesen Beispielen wurden die Polymerkomponenten entsprechend den Angaben in Tabelle 1 in Semibatch-Fahrweise ohne Vorlage in einem Rührkolben unter Stickstoffspülung polymerisiert, in einem Labor-Rotationsdünnschichtverdampfer eingeengt und anschließend im Trockenschrank bei Temperaturen von 190°C unter Vakuum entmonomerisiert.

Zusätzlich wurden zur Polymerisation noch eingesetzt:

Beispiel 5:    0,1 Masseprozent dimeres -Methylstyrol
               0,4 Masseprozent Divinylbenzol

Beispiel 6:    0,5 Masseprozent dimeres -Methylstyrol

Die Eigenschaften der erhaltenen Polymerkomponenten sind ebenfalls in Tabelle 1 angegeben.

Herstellung der Schmelzmischungen

Beispiele 7 bis 15

Zur Herstellung der Schmelzmischungen wurden die in den Beispielen 1 bis 6 erzeugten Polymeren in gemahlener Form entsprechend den in Tabelle 2 angegebenen Mengen in einem Laborreaktor dosiert, bei einer Temperatur von ca. 185°C unter Stickstoffatmosphäre über einen Zeitraum von 3 Stunden unter Rühren homogenisiert, in schmelzflüssigem Zustand ausgetragen und nach dem Abkühlen in einer Mühle gemahlen. Die Eigenschaften der so erhaltenen Schmelzmischungen sind in der Tabelle 3 zusammengestellt. Dabei dient als Maß für die Wärmeformbeständigkeit die Glasübergangstemperatur unter den in den Beispielen 1 bis 4 genannten konstanten Bedingungen. Diese experimentell bestimmte Glasübergangstemperatur $T^{exp}$ wird in der Tabelle 3 der theoretisch aus den Glasübergangstemperaturen der einzelnen Mischungskomponenten berechneten Glasübergangstemperatur der Schmelzmischung $T^{ber}$ gegenübergestellt.

Dabei ist von dem bekannten Sachverhalt auszugehen, daß die Glasübergangstemperatur von statistischen Copolymeren aus verschiedenen Monomeren bzw. die Glasübergangstemperatur von Mischungen von miteinander verträglichen Polymeren auch chemisch unterschiedlicher Zusammensetzung z. B. durch die Gleichung von Fox (T.G. Fox: Bull.Am.Phys. Soc. 1 (1956), 123) aus den Glasübergangstemperaturen der Komponenten ($T_{g,i}$) und den Massenanteilen dieser Komponenten ($w_i$) über die Gleichung

$$\frac{1}{T_g} = \frac{w_1}{T_{g,1}} + \frac{w_2}{T_{g,2}}$$

berechnet werden kann.

Diese Gleichungen liefern jedoch Glasübergangstemperaturen für Mischungen, die noch unter den Glasübergangstemperaturen liegen, die additiv aus den Glasübergangstemperaturen der einzelnen Komponenten berechnet wurden.

Für die Berechnung der in Tabelle 3 angegebenen Glasübergangstemperaturen $T^{ber}$ wurde deshalb davon ausgegangen, daß für chemisch weitgehend einheitliche Polymerkomponenten verschiedener Molmassen die Glasübergangstemperatur der Mischung ($T^{ber}$) additiv aus den Glasübergangstemperaturen der einzelnen Komponenten ($T_{,i}$) und deren Massenanteilen ($w_i$) nach der Gleichung

$$T^{ber} = w_1 T_{g,1} + w_2 T_{g,2}$$

berechnet werden kann.

Aus der Tabelle 3 ist aus dem Vergleich der experimentell bestimmten und der berechneten Glasübergangstemperatur der Schmelzmischungen ersichtlich, daß die erfindungsgemäß hergestellten Mischungen überraschend wesentlich höhere Glasübergangstemperaturen und damit Wärmeformbeständigkeiten als erwartet aufweisen. Auf den Einsatz von zusätzlichen speziellen Monomeren im Herstellungsprozeß kann somit verzichtet werden.

Beispiel 16 (Vergleichsbeispiel)

In diesem Beispiel wurde analog den Beispielen 7 bis 15 verfahren, jedoch wurden die Polymerkomponenten entsprechend Tabelle 2 in anderen Mengenverhältnissen dosiert. Wie aus der Tabelle 3 ersichtlich ist, kann bei einer nicht erfindungsgemäßen Vorgehensweise keine Erhöhung der Glasübergangstemperatur und damit der Wärmeformbeständigkeit der Polymerisate erzielt werden.

# EP 0 591 734 B1

Tabelle 1: Eigenschaften der Polymerkomponenten

| Bei-spiel | Monomergemisch |  |  |  |  |  | massen-mittlere Molmasse | Uneinheit-lichkeit nach Schulz | K-Wert nach Fikentscher | Rest-styrol-gehalt (Masse-prozent) | Glasüber-gangstem-peratur (K) |
|---|---|---|---|---|---|---|---|---|---|---|---|
|  | Monomer 1 |  | Monomer 2 |  | Monomer 3 |  |  |  |  |  |  |
|  | Art | Masse-prozent | Art | Masse-prozent | Art | Masse-prozent |  |  |  |  |  |
| 1 | Styrol | 70 | n-Butyl-meth-acrylat | 30 | - | - | 177 000 | 1,47 | 34,5[1] | 0,55 | 336 |
| 2 | Styrol | 70 | n-Butyl-meth-acrylat | 30 | - | - | 22 000 | 2,03 | 20,0[1] | 0,39 | 325 |
| 3 | Styrol | 70 | n-Butyl-meth-acrylat | 30 | - | - | 10 900 | 1,96 | 12,6[1] | 0,30 | 311 |
| 4 | Styrol | 70 | n-Butyl-meth-acrylat | 30 | - | - | 211 800 | 1,38 | 53,8[2] | 0,19 | 341 |
| 5 | Styrol | 40 | n-Butyl-meth-acrylat | 40 | Methyl-meth-acrylat | 20 | 222 600 | 3,66 | 42,6[2] | - | 335 |
| 6 | Styrol | 40 | n-Butyl-meth-acrylat | 40 | Methyl-meth-acrylat | 20 | 40 200 | 2,22 | 27,2[2] | - | 329 |

[1] DMF

[2] Toluol

Tabelle 2

| Zusammensetzungen der Schmelzmischungen |  |  |  |  |  |  |
|---|---|---|---|---|---|---|
| Beispiel | Komponente 1 |  | Komponente 2 |  | Komponente 3 |  |
|  | aus Beisp. | Masseprozent | aus Beisp. | Masseprozent | aus Beisp. | Masseprozent |
| 7 | 3 | 50 | 4 | 50 | - | - |
| 8 | 3 | 20 | 1 | 20 | 2 | 60 |
| 9 | 3 | 45 | 1 | 10 | 2 | 45 |
| 10 | 3 | 50 | 4 | 25 | 2 | 25 |
| 11 | 3 | 50 | 4 | 37,5 | 2 | 12,5 |

Tabelle 2   (fortgesetzt)

| Zusammensetzungen der Schmelzmischungen | | | | | | |
|---|---|---|---|---|---|---|
| Beispiel | Komponente 1 | | Komponente 2 | | Komponente 3 | |
| | aus Beisp. | Masseprozent | aus Beisp. | Masseprozent | aus Beisp. | Masseprozent |
| 12 | 3 | 50 | 4 | 45 | 2 | 5 |
| 13 | 3 | 70 | 4 | 15 | 2 | 15 |
| 14 | 3 | 70 | 4 | 22,5 | 2 | 7,5 |
| 15 | 6 | 50 | 5 | 50 | - | - |
| 16 | 3 | 80 | 1 | 5 | 2 | 15 |

Tabelle 3

| Eigenschaften der Schmelzmischungen | | | |
|---|---|---|---|
| Schmelzmischung aus Beispiel | $T^{ber}$ (K) | $T^{exp}$ (K) | $T^{exp} - T^{ber}$ (K) |
| 7 | 326 | 328 | +2 |
| 8 | 324 | 331 | +7 |
| 9 | 320 | 326 | +6 |
| 10 | 322 | 326 | +4 |
| 11 | 324 | 335 | +11 |
| 12 | 325 | 330 | +5 |
| 13 | 318 | 325 | +7 |
| 14 | 320 | 325 | +5 |
| 15 | 332 | 333 | +1 |
| 16 | 314 | 309 | -5 |

**Patentansprüche**

1. Polymerisate breiter Molmassenverteilung mit erhöhter Wärmeformbeständigkeit, dadurch gekennzeichnet, daß sie chemisch weitgehend einheitliche Polymerkomponenten aus Monomerzusammensetzungen, bestehend aus

A) 40 bis 90 Masseteilen mindestens eines vinylaromatischen Monomeren,

B) 10 bis 60 Masseteilen mindestens eines (Meth)acrylsäureesters mit einer C-Zahl in der Alkylgruppe des Alkohols von 3 bis 8 und

C) 0 bis 30 Masseteilen, bezogen auf 100 Masseteile A und B, mindestens eines weiteren copolymerisierbaren Monomeren

als Mischungen dieser Polymerkomponenten, bestehend aus

I) 20 bis 90 Masseteilen einer Polymerkomponente mit einer massenmittleren Molmasse von 2 000 bis 80 000 und einer molekularen Uneinheitlichkeit nach Schulz von 1 bis 10,

II) 10 bis 80 Masseteilen einer Polymerkomponente mit einer massenmittleren Molmasse von 100 000 bis 800 000 und einer molekularen Uneinheitlichkeit nach Schulz von 1 bis 5 und gegebenenfalls

III) 0 bis 180 Masseteilen, bezogen auf 100 Masseteile der Polymerkomponenten I und II, mindestens einer weiteren Polymerkomponente mit einer massenmittleren Molmasse von 5 000 bis 500 000 und einer molekularen Uneinheitlichkeit nach Schulz von 1 bis 10,

enthalten.

**2.** Polymerisate breiter Molmassenverteilung mit erhöhter Wärmeformbeständigkeit nach Anspruch 1, dadurch gekennzeichnet, daß als vinylaromatisches Monomer Styrol enthalten ist.

**3.** Polymerisate breiter Molmassenverteilung mit erhöhter Wärmeformbeständigkeit nach Anspruch 1 und 2, dadurch gekennzeichnet, daß als (Meth)acrylsäureester n-Butylmethacrylat enthalten ist.

**4.** Polymerisate breiter Molmassenverteilung mit erhöhter Wärmeformbeständigkeit nach Anspruch 1 bis 3, dadurch gekennzeichnet, daß als weiteres copolymerisierbares Monomeres Methylmethacrylat enthalten ist.

**5.** Polymerisate breiter Molmassenverteilung mit erhöhter Wärmeformbeständigkeit nach Anspruch 1, dadurch gekennzeichnet, daß als Polymerkomponente I vorzugsweise 45 bis 85 Masseteile mit einer massenmittleren Molmasse von 4 000 bis 30 000 und einer molekularen Uneinheitlichkeit nach Schulz von 1 bis 10 enthalten ist.

**6.** Polymerisate breiter Molmassenverteilung mit erhöhter Wärmeformbeständigkeit nach Anspruch 1, dadurch gekennzeichnet, daß als Polymerkomponente II 15 bis 55 Masseteile mit einer massenmittleren Molmasse von 150 000 bis 500 000 und einer molekularen Uneinheitlichkeit nach Schulz von 1 bis 5 enthalten ist.

**7.** Polymerisate breiter Molmassenverteilung mit erhöhter Wärmeformbeständigkeit nach Anspruch 1 bis 6, dadurch gekennzeichnet, daß die Polymermischungen durch Schmelzmischen homogenisiert sind.

**Claims**

**1.** Polymers with a wide molecular weight distribution and higher heat resistance, characterised by the fact that they contain chemically predominantly uniform polymer components made of monomer compositions, comprising

    a) 40 to 90 parts by weight of at least one vinyl aromatic monomer,

    b) 10 to 60 parts by weight of a (meth)acrylic-acid ester with a C number in the alkyl group of alcohol from 3 to 8 and

    c) 0 to 30 parts by weight, related to 100 parts by weight A and B, of at least one other copolymerisable monomer

as mixtures of these polymer components, comprising

    I) 20 to 90 parts by weight of a polymer component with a weight-average molecular weight of 2,000 to 80,000 and a molecular non-uniformity of 1 to 10 according to Schulz,

    II) 10 to 80 parts by weight of a polymer component with a weight-average molecular weight of 100,000 to 800,000 and a molecular non-uniformity of 1 to 5 according to Schulz and, if necessary,

    III) 0 to 180 parts by weight, related to 100 parts by weight of polymer components I and II, at least one other polymer component with a weight-average molecular weight of 5,000 to 500,000 and a molecular non-uniformity of 1 to 10 according to Schulz.

**2.** Polymers with a wide molecular weight distribution and higher heat resistance pursuant to claim 1, characterised by the fact that styrene is contained as vinyl aromatic monomer.

**3.** Polymers with a wide molecular weight distribution and higher heat resistance pursuant to claims 1 and 2, characterised by the fact that n-butyl-methacrylate is contained as (meth)acrylic-acid ester.

**4.** Polymers with a wide molecular weight distribution and higher heat resistance pursuant to claims 1 through 3, characterised by the fact that methyl methacrylate is contained as a further copolymerizable monomer.

**5.** Polymers with a wide molecular weight distribution and higher heat resistance pursuant to claim 1, characterised by the fact that preferably 45 to 85 parts by weight with a weight-average molecular weight of 4,000 to 30,000 and a molecular non-uniformity of 1 to 10 according to Schulz are contained as polymer component I.

6. Polymers with a wide molecular weight distribution and higher heat resistance pursuant to claim 1, characterised by the fact that 15 to 55 parts by weight with a weight-average molecular weight of 150,000 to 500,000 and a molecular non-uniformity of 1 to 5 according to Schulz are contained as polymer component II.

7. Polymers with a wide molecular weight distribution and higher heat resistance pursuant to claims 1 through 6, characterised by the fact that the polymer mixtures are homogenised by flux mixing.

**Revendications**

1. Polymères de large répartition des poids moléculaires et de stabilité de forme thermique plus élevée caractérisés par le fait qu'ils contiennent des constituants de polymères largement uniformes à partir de compositions monomères, constituées de

A) 40 à 90 parts en poids au moins d'un monomère de vinyle aromatique,

B) de 10 à 60 parts en poids d'un ester (méth)acrylique avec un index c dans un groupe alkyle de l'alcool de 3 à 8 et

C) de 0 à 30 parts en poids, rapportées à 100 parts en poids de A et B, au moins d'un autre monomère copolymérisable

en tant que mélanges de ces constituants de polymère, formés de

I) 20 à 90 parts en poids d'un constituant de polymère d'une masse moléculaire moyenne en poids de 2 000 à 80 000 et d'une hétérogénéité moléculaire selon Schulz de 1 à 10,

II) de 10 à 80 parts en poids d'un constituant de polymère d'une masse moléculaire moyenne en poids de 100 000 à 800 000 et d'une hétérogénéité moléculaire selon Schulz de 1 à 5 et éventuellement

III) de 0 à 180 parts en poids, rapportées à 100 parts en poids des constituants de polymère I et II, au moins d'un autre constituant de polymère de masse moléculaire moyenne en poids de 5 000 à 500 000 et d'une hétérogénéité moléculaire selon Schulz de 1 à 10.

2. Polymères de large répartition des poids moléculaires et de stabilité de forme thermique plus élevée selon la spécification 1 caractérisés par le fait qu'ils contiennent du styrène en tant que monomère de vinyle aromatique.

3. Polymères de large répartition des poids moléculaires et de stabilité de forme thermique plus élevée selon les spécifications 1 et 2 caractérisés par le fait qu'ils contiennent du n-buthylméthacrylate en tant qu'ester (méth) acrylique.

4. Polymères de large répartition des poids moléculaires et de stabilité de forme thermique plus élevée selon les spécifications de 1 à 3 caractérisés par le fait qu'ils contiennent du méthylméthacrylate comme monomère copolymérisable supplémentaire.

5. Polymères de large répartition des poids moléculaires et de stabilité de forme thermique plus élevée selon la spécification 1 caractérisés par le fait qu'ils contiennent comme constituant de polymère I de préférence de 45 à 85 parts en poids de masse moléculaire moyenne en poids de 4 000 à 30 000 et d'une hétérogénéité moléculaire selon Schulz de 1 à 10.

6. Polymères de large répartition des poids moléculaires et de stabilité de forme thermique plus élevée selon la spécification 1 caractérisés par le fait qu'ils contiennent comme constituant de polymère II de préférence de 15 à 55 parts en poids de masse moléculaire moyenne en poids de 150 000 à 500 000 et d'une hétérogénéité moléculaire selon Schulz de 1 à 5.

7. Polymères de large répartition des poids moléculaires et de stabilité de forme thermique plus élevée selon les spécifications de 1 à 6 caractérisés par le fait que les mélanges de polymères sont homogénéisés par le malaxage en fusion des mélanges de polymères.